# EUROPÄISCHE PATENTSCHRIFT

(11) **EP 3 317 565 B1**
(45) Veröffentlichungstag und Bekanntmachung des Hinweises auf die Patenterteilung: **03.09.2025**
(21) Anmeldenummer: 16740948.1
(22) Anmeldetag: 30.06.2016
(51) Int. Cl.: F16J 10/04, F02F 1/16

(54) **ZYLINDERLAUFBUCHSE FÜR EINE BRENNKRAFTMASCHINE**
CYLINDER LINER FOR AN INTERNAL COMBUSTION ENGINE
CHEMISE DE CYLINDRE POUR MOTEUR À COMBUSTION INTERNE

(30) Priorität: 03.07.2015 AT 4302015
(43) Veröffentlichungstag der Anmeldung: 09.05.2018
(60) Teilanmeldung: 25172507.3
(73) Patentinhaber: Innio Jenbacher GmbH & Co OG, 6200 Jenbach (AT)
(72) Erfinder: BECKER, Florian, 6232 Münster (AT); SZAFRANSKI, Tomasz, 01-494 Warsaw (PL); KOROTKO, Jakub, 05-400 Otwock (PL); KANIECKI, Radoslaw, 06-100 Pultsk (PL)
(74) Vertreter: Torggler & Hofmann Patentanwälte - Innsbruck
(86) Internationale Anmeldenummer: PCT/AT2016/050237
(87) Internationale Veröffentlichungsnummer: WO 2017/004643

(56) Entgegenhaltungen:
- EP-A1- 0 614 009
- EP-B1- 0 614 009
- CN-Y- 2 700 583
- US-A- 3 086 505
- US-A- 5 150 668
- US-A- 5 251 578
- US-A- 5 979 374

## Beschreibung

Die Erfindung betrifft eine Anordnung aus einer Zylinderlaufbuchse einem Zylinderkopf und einem Kurbelgehäuse.

Eine Zylinderlaufbuchse (engl. *cylinder liner*) ist ein Einsatz in ein Kurbelgehäuse eines Hubkolbenmotors (Brennkraftmaschine), welcher die Lauffläche für einen Kolben des Hubkolbenmotors bildet. Zylinderlaufbuchsen werden häufig eingesetzt, weil der Werkstoff, aus dem das Kurbelgehäuse hergestellt ist, nicht die tribologischen Anforderungen an eine Lauffläche für die Kolbenbewegung erfüllt. So ist es zweckdienlich, in eine Zylinderbohrung im Kurbelgehäuse eine Zylinderlaufbuchse anzuordnen. Es bestehen verschiedene Möglichkeiten, eine Zylinderlaufbuchse in das Kurbelgehäuse einzubauen. Bei PKW Motoren ist es bspw. üblich, eine Zylinderlaufbuchse in das Kurbelgehäuse einzugießen. Bei größeren Brennkraftmaschinen, bspw. stationäre Brennkraftmaschinen zur Stromerzeugung, werden Zylinderlaufbuchsen lösbar in eine Zylinderbohrung im Kurbelgehäuse eingesetzt.

Hinsichtlich der Art der Kühlung unterscheidet man "nasse" und "trockene" Zylinderlaufbuchsen. Nasse Zylinderlaufbuchsen werden von einem Kühlmittel der Brennkraftmaschine direkt umspült. Dazu ist ein Spaltraum zwischen dem Außenmantel der Zylinderlaufbuchse und der Wandung der Bohrung, in welche die Zylinderlaufbuchse eingesetzt wird, vorgesehen. Eine nasse Zylinderlaufbuchse wird daher mit einer Dichtung eingesetzt.

Trockene Zylinderlaufbuchsen, die in der Regel eine geringere Wandstärke als nasse Zylinderlaufbuchsen aufweisen, werden üblicherweise in eine Zylinderbohrung des Kurbelgehäuses eingeschrumpft. Die Wärmeabfuhr aus dem von der Zylinderlaufbuchse gebildeten Zylinder erfolgt in diesem Fall über Wärmeleitung in das Kurbelgehäuse.

Bei nassen Zylinderlaufbuchsen bestehen verschiedene Möglichkeiten des Einbaus in die Aufnahme im Kurbelgehäuse: sogenannte hängende Zylinderlaufbuchsen sind an einem den oberen Rand der Zylinderlaufbuchse bildenden Bund in das Kurbelgehäuse eingesetzt. Sogenannte Mid-Stop-Liner weisen eine Schulter an ihrem Außenumfang in der Mitte ihrer Längserstreckung auf, in der sie in einer entsprechenden Aufnahme der Bohrung des Kurbelgehäuses gelagert sind. Eine solche Konstruktion ist bspw. aus der US 4,244,330 oder der US 5,979,374 A bekannt. Bei Bottom-Stop Zylinderlaufbuchsen (engl. *bottom-stop*-*liner*) erfolgt die Lagerung der Zylinderlaufbuchse an deren unteren, d.h. dem Zylinderkopf angewandten Seite. Eine solche Konstruktion ist aus der US 4,385,595 oder der US 3,086,505 bekannt. Schließlich sind auch Zylinderlaufbuchsen bekannt, die über einen Bund an ihrem oberen, d.h. dem Zylinderkopf zugewandten Ende, im Zylindergehäuse der Brennkraftmaschine in vertikaler Richtung fixiert sind. Eine solche Konstruktion ist bspw. aus der DE 1 957 811 bekannt.

Weitere aus dem Stand der Technik bekannte Ausführungsvarianten gehen aus der US 5,251,578 A oder der EP 0 512 858 A1 hervor.

In Betrieb sind Zylinderlaufbuchsen hohen thermischen und mechanischen Belastungen ausgesetzt.

Aufgabe der Erfindung ist es, eine Anordnung einer Zylinderlaufbuchse und einem Kurbelgehäuse mit verbesserter Kühlung anzugeben.

Diese Aufgaben werden gelöst durch eine Anordnung aus einer Zylinderlaufbuchse, einem Zylinderkopf und einem Kurbelgehäuse nach Anspruch 1. Vorteilhafte Ausgestaltungen sind in den abhängigen Ansprüchen angegeben.

Erfindungsgemäß ist eine Anordnung aus einer Zylinderlaufbuchse mit einem Bund, einem Zylinderkopf und einem Kurbelgehäuse vorgesehen, wobei die Zylinderlaufbuchse an ihrer Mantelfläche genau eine vom Bund axial beabstandete, mit wenigstens einer axialen Öffnung versehene vorstehende Strömungsleiteinrichtung aufweist, wobei die Zylinderlaufbuchse in einer Zylinderbohrung unter Ausbildung einer Kavität zwischen einer Mantelfläche der Zylinderlaufbuchse und einer Wandung der Zylinderbohrung angeordnet ist, wobei an axial entgegengesetzten Enden der Zylinderbohrung wenigstens ein Einströmkanal und wenigstens ein Ausströmkanal für ein Kühlmedium angeordnet sind, wobei die Strömungsleiteinrichtung in der Kavität axial zwischen dem wenigstens einen Einströmkanal und dem wenigstens einen Ausströmkanal vorgesehen ist, wobei die Zylinderlaufbuchse so im Kurbelgehäuse ausgerichtet ist, dass wenigstens eine axiale Öffnung der vorstehenden Strömungsleiteinrichtung hinsichtlich ihrer Winkellage mit der Position wenigstens eines im Zylinderkopf angeordneten Auslassventils korrespondiert.

Indem die Zylinderlaufbuchse an ihrem Umfang genau eine vom Bund axial beabstandete, mit wenigstens einer axialen Öffnung versehene vorstehende Strömungsleiteinrichtung aufweist, ist die Kühlung der Zylinderlaufbuchse wesentlich verbessert. Unter axialer Öffnung ist zu verstehen, dass die Leiteinrichtung eine Unterbrechung aufweist, die eine Durchströmung der Leiteinrichtung in einer Richtung einer Mantellinie (d.h. parallel zur Längsachse) der Zylinderlaufbuchse erlaubt.

Bevorzugt ist vorgesehen, dass die vorstehende Strömungsleiteinrichtung in einer Umfangsrichtung der Mantelfläche der Zylinderlaufbuchse verläuft.

Die vorstehende Strömungsleiteinrichtung kann zum Beispiel als umlaufender Steg an der Zylinderlaufbuchse ausgebildet sein.

Die Strömungsleiteinrichtung verläuft vorzugsweise völlig in Umfangsrichtung. Es wäre auch vorstellbar, die Strömungsleiteinrichtung auch ähnlich einem schräg auf den Mantel der Zylinderlaufbuchse aufgesetzten Ring auszubilden. Dies ist fertigungstechnisch jedoch sehr aufwendig.

Vorzugsweise ist die Strömungsleiteinrichtung als Steg an der Mantelfläche der Zylinderlaufbuchse ausgebildet solchermaßen, dass der Steg sich kreisringförmig umfänglich aus der Mantelfläche der Zylinderlaufbuchse erstreckt.

Die vorstehende Strömungsleiteinrichtung kann als auf die Zylinderlaufbuchse nachträglich aufgebrachte Manschette oder Ring ausgebildet sein. Als Werkstoff dafür kommt Metall oder auch Kunststoff in Betracht.

Bevorzugt ist jedoch vorgesehen, dass die vorstehende Strömungsleiteinrichtung integraler Bestandteil der Zylinderlaufbuchse ist. So kann die Strömungsleiteinrichtung über eine Dreh-Operation gefertigt werden.

Bevorzugt ist vorgesehen, dass bei Vorliegen genau einer axialen Öffnung diese maximal 25% des Umfangs der vorstehenden Strömungsleiteinrichtung beträgt.

In anderen Worten erstreckt sich die Öffnung (bei Vorliegen der Strömungsleiteinrichtung in Umfangsrichtung) über maximal 90°.

Die Anzahl der Öffnungen richtet sich nach den Gegebenheiten im Einbau der Zylinderlaufbuchse in ein Kurbelgehäuse. Insbesondere wird die Form und Anzahl der in einen Spaltraum zwischen Zylinderlaufbuchse und Kurbelgehäuse mündenden Kühlkanäle berücksichtigt.

Es ist vorgesehen, dass bei Vorliegen von zwei Öffnungen diese jeweils maximal 20% des Umfangs der vorstehenden Strömungsleiteinrichtung betragen.

Bei Vorliegen von drei Öffnungen ist vorgesehen, dass diese jeweils maximal 18% des Umfangs der vorstehenden Strömungsleiteinrichtung betragen.

Es ist vorgesehen, dass bei Vorliegen von vier Öffnungen diese jeweils maximal 15% des Umfangs der vorstehenden Strömungsleiteinrichtung betragen.

Bevorzugt ist vorgesehen, dass die Summe aller axialen Öffnungen maximal 25%, vorzugsweise maximal 10% des Umfangs der vorstehenden Strömungsleiteinrichtung beträgt.

Es kann vorgesehen sein, dass die vorstehende Strömungsleiteinrichtung, bezogen auf die Längserstreckung der Zylinderlaufbuchse in der Mitte der Zylinderlaufbuchse, vorzugsweise in dem zum Bund weisenden oberen Drittel der Zylinderlaufbuchse angeordnet ist. Damit wird erreicht, dass die Beeinflussung der Strömung eines Kühlmediums durch die Strömungsleiteinrichtung in hohem Maß aufrecht ist, wenn die Strömung auf thermisch höher belastete Zonen trifft - und diese sind in der Regel auf der Höhe des Bundes einer Zylinderlaufbuchse.

Bevorzugt ist vorgesehen, dass die Zylinderlaufbuchse als hängende, nasse Zylinderlaufbuchse ausgebildet ist.

Die Erfindung eignet sich insbesondere für die Anwendung auf dieses Konstruktionsprinzip.

Bevorzugt kann vorgesehen sein, dass die Zylinderlaufbuchse über ihren Bund im Kurbelgehäuse gelagert ist. Weiters kann vorgesehen sein, dass zwischen wenigstens einem Teil der Mantelfläche der Zylinderlaufbuchse und einer Wandung einer Aufnahme der Zylinderlaufbuchse im Kurbelgehäuse eine von einem Kühlmedium durchströmbare Kavität ausgebildet ist.

Erfindungsgemäß ist die Zylinderlaufbuchse in einer Zylinderbohrung unter Ausbildung einer Kavität zwischen einer Mantelfläche der Zylinderlaufbuchse und einer Wandung der Zylinderbohrung angeordnet, wobei an axial entgegengesetzten Enden der Zylinderbohrung wenigstens ein Einströmkanal und wenigstens ein Ausströmkanal für ein Kühlmedium angeordnet sind, wobei in der Kavität axial zwischen dem wenigstens einen Einströmkanal und dem wenigstens einen Ausströmkanal eine Strömungsleiteinrichtung vorgesehen ist.

Damit wird die Einbaulage einer Zylinderlaufbuchse in einer Zylinderbohrung umrissen. Die Kühlung der Zylinderlaufbuchse erfolgt durch Umströmung mit einem Kühlmedium, welches entgegengesetzten Enden der Zylinderbohrung ein- bzw. abströmt.

Bevorzugt ist vorgesehen, dass die Zahl der axialen Öffnungen in der Strömungsleiteinrichtung der der Zahl von Ausströmkanälen entspricht. In der Praxis werden also die Öffnungen und die Zahl der Ausströmkanäle aufeinander abgestimmt.

Erfindungsgemäß ist die Strömungsleiteinrichtung an der Wandung der Zylinderbohrung angeordnet.

Es ist vorgesehen, dass die Zylinderlaufbuchse so im Kurbelgehäuse ausgerichtet ist, dass wenigstens eine axiale Öffnung der vorstehenden Strömungsleiteinrichtung hinsichtlich ihrer Winkellage mit der Position wenigstens eines im Zylinderkopf angeordneten Auslassventils korrespondiert. Der Bereich des Auslassventils bzw. der Auslassventile (wenn mehrere Auslassventile pro Zylinder vorgesehen sind) ist thermisch hochbelastet.

Durch die bevorzugte Anordnung wird erreicht, dass in jenen Bereichen eine verstärkte Kühlung stattfindet. Dazu ist ein lagerichtiger Einbau der Zylinderlaufbuchse bezüglich ihrer Winkellage erforderlich.

Bevorzugt ist vorgesehen, dass das Kurbelgehäuse wenigstens einen Einströmkanal und wenigstens einen Abfuhrkanal zur Führung eines Kühlmediums aufweist, welche in eine zwischen einer Wandung einer Aufnahme der Zylinderlaufbuchse im Kurbelgehäuse und wenigstens einem Teil der Mantelfläche der Zylinderlaufbuchse gebildete Kavität münden.

Erfindungsgemäß ist die Zylinderlaufbuchse so im Kurbelgehäuse ausgerichtet, dass die wenigstens eine axiale Öffnung der vorstehenden Strömungsleiteinrichtung hinsichtlich ihrer Winkellage mit einem Einströmkanal korrespondiert. Dazu ist ein lagerichtiger Einbau der Zylinderlaufbuchse bezüglich ihrer Winkellage erforderlich.

Bevorzugt ist vorgesehen, dass zwischen der vorstehenden Strömungsleiteinrichtung und der Wandung der Aufnahme der Zylinderlaufbuchse im Kurbelgehäuse ein Abstand vorhanden ist.

Mit Abstand ist hier gemeint, dass die Strömungsleiteinrichtung in radialer Richtung gegenüber der Wandung der Aufnahme der Zylinderlaufbuchse im Kurbelgehäuse mit Spiel gefertigt ist. Die Leiteinrichtung dient nicht als mechanische Führung oder Abstützung der Zylinderlaufbuchse im Kurbelgehäuse, sondern ist als Strömungsleiteinrichtung ausgebildet.

Der Abstand kann zum Beispiel als Spiel von 0,5 mm bemessen sein.

Auch bei für einen Einbau günstigen Abstand der Strömungsleiteinrichtung von der Wandung der Aufnahme der Zylinderlaufbuchse im Kurbelgehäuse ist gewährleistet, dass der größte Teil der Strömung des Kühlmediums durch die Öffnung bzw. die Öffnungen in der Strömungsleiteinrichtung erfolgt.

Durch die Erfindung werden also sogenannte Stagnationszonen im den die Zylinderlaufbuchse umgebenden Wassermantel vermieden. In Stagnationszonen ist die Strömungsgeschwindigkeit eines Kühlmediums gering, wodurch ein nur schlechter Wärmeübergang zwischen dem Kühlmedium und den an die Stagnationszone angrenzenden Bauteile stattfindet.

Durch die Erfindung gelingt es, das Kühlmedium gezielt zu den thermisch am höchsten beanspruchten Zonen um die Zylinderlaufbuchse zu lenken.

Die Erfindung wird im Folgenden durch die Figuren näher erläutert. Dabei zeigt:
- Fig. 1: eine Zylinderlaufbuchse in einem ersten Ausführungsbeispiel,
- Fig. 2: die Zylinderlaufbuchse aus Fig. 1 in einem Aufriss, einem Grundriss und in einem Querschnitt
- Fig. 3: eine Anordnung einer Zylinderlaufbuchse und einem Kurbelgehäuse,
- Fig. 4: eine Draufsicht eines Kurbelgehäuses,
- Fig. 5: eine einer Zylinderlaufbuchse und einem Kurbelgehäuse in einem nicht erfindungsgemäßen Ausführungsbeispiel
- Fig. 6: eine schematische Darstellung einer Zylinderlaufbuchse in einem weiteren Ausführungsbeispiel
- Fig. 7a: eine Draufsicht eines Kurbelgehäuses
- Fig. 7b: ein Diagramm von Temperaturen an einer Zylinderlaufbuchse im Bereich des Bundes

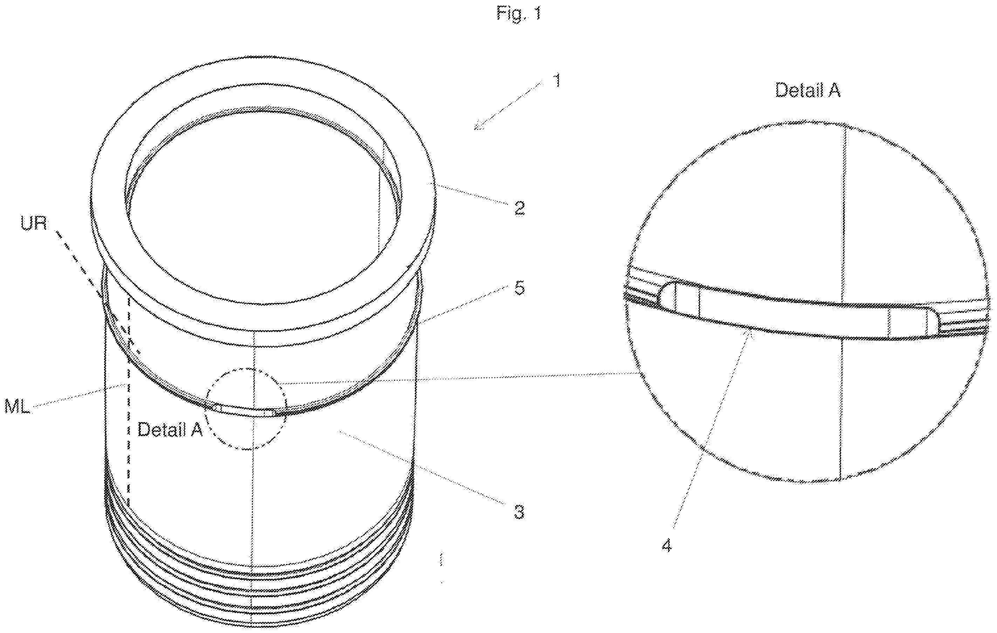

Figur 1 zeigt eine erfindungsgemäße Zylinderlaufbuchse 1 in einem ersten Ausführungsbeispiel.

Die Zylinderlaufbuchse 1 weist an der Mantelfläche 3 eine vorstehende Strömungsleiteinrichtung 5 in Form eines umlaufenden Steges auf. Die vorstehende Strömungsleiteinrichtung 5 zeigt eine Öffnung 4 in Form einer Unterbrechung des die Strömungsleiteinrichtung 5 bildenden Steges. Die Öffnung 4 ist auf der rechten Seite der Figur 1 als vergrößertes Detail nochmals dargestellt. In der Darstellung ist nur eine, dem Betrachter zugewandte Öffnung 4 zu erkennen. Die Zylinderlaufbuchse 1 kann natürlich mehrere Öffnungen 4 aufweisen, im vorliegenden Ausführungsbeispiel bestehen zwei Öffnungen 4.

Im Bereich der Öffnung 4 ist in diesem Ausführungsbeispiel die Strömungsleiteinrichtung 5 bis zur Mantelfläche 3 der Zylinderlaufbuchse 1 entfernt. Es ist natürlich auch vorstellbar, die Öffnung so auszubilden, dass noch Teile der Strömungsleiteinrichtung 5 aus der Mantelfläche 3 herausragen. Ebenso denkbar ist es, die Öffnung(en) als Bohrungen oder Durchbrüche in der Strömungsleiteinrichtung 5 auszubilden.

Die Zylinderlaufbuchse 1 weist einen Bund 2 auf, über welchen die Zylinderlaufbuchse 1 beim Einsetzen in einer Zylinderbohrung eines Kurbelgehäuses einer Brennkraftmaschine (hier nicht dargestellt) gelagert werden kann.

Obschon aus der darstellenden Geometrie bekannt, sind die eine Mantellinie ML und eine Umfangsrichtung UR in der Figur 1 eingetragen.

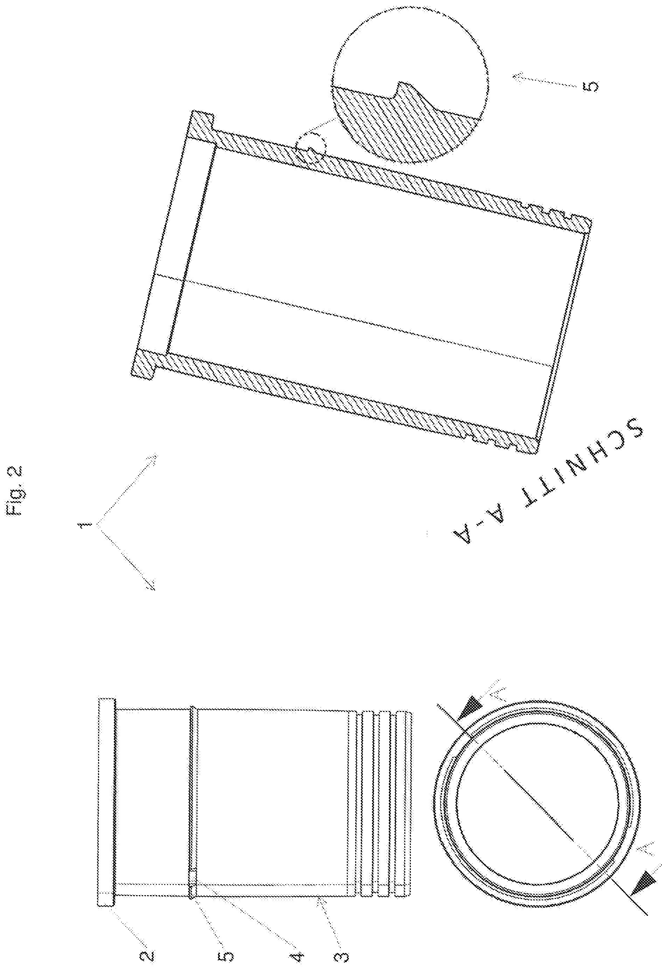

Figur 2 zeigt die Zylinderlaufbuchse 1 von Figur 1 in einem Aufriss, einem Grundriss und in einem Querschnitt.

Die im Grundriss eingezeichnete Schnittführung A-A ist so gelegt, dass der Schnitt auf der linken Seite durch die vorstehende Strömungsleiteinrichtung 5 und rechts durch eine Öffnung 4 verläuft. Da der Schnitt A-A entlang eines Durchmessers der Zylinderlaufbuchse 1 erfolgt, ist daraus auch erkennbar, dass die Öffnungen 4 in diesem Ausführungsbeispiel nicht genau gegenüber am Umfang angeordnet sind.

Auf der rechten Bildhälfte von Figur 2 erkennbar ist der sich durch Schnitt A-A ergebende Querschnitt der Zylinderlaufbuchse 1. Die Strömungsleiteinrichtung 5 ist als Detail nochmals hervorgehoben.

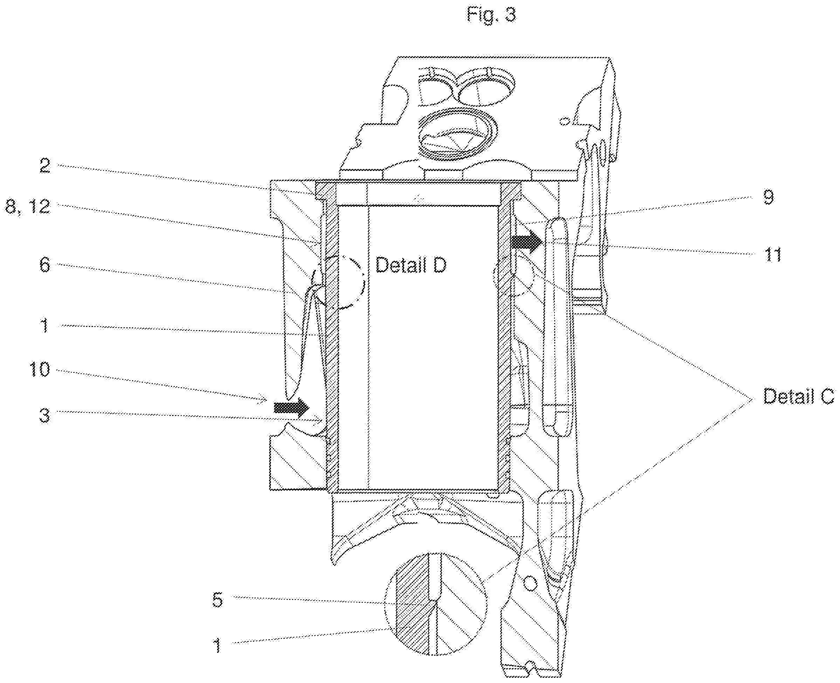

Figur 3 zeigt die Anordnung einer erfindungsgemäßen Zylinderlaufbuchse 1 in einem Kurbelgehäuse 6. Die Zylinderlaufbuchse 1 ist in eine Aufnahme (die Zylinderbohrung 8) in das Kurbelgehäuse 6 eingesetzt und liegt mit ihrem Bund 2 auf einer entsprechend ausgebildeten Schulter im Kurbelgehäuse 6 auf.

Zwischen der Mantelfläche 3 der Zylinderlaufbuchse 1 und einer Wandung 12 der Zylinderbohrung 8 im Kurbelgehäuse 6 ist eine von einem Kühlmedium M durchströmbare Kavität 9 ausgebildet.

In dieser als Wassermantel bezeichnete Kavität 9 strömt ein Kühlmedium M vorzugsweise so, dass die Strömungsrichtung von unten (also der dem Zylinderkopf 7abgewandten Seite) nach oben (also der dem Zylinderkopf 7 zugewandten Seite) erfolgt.

Im Detail C ist gezeigt, wie die Strömungsleiteinrichtung 5 an einer Stelle ihres Umfanges die Wandung 12 der Zylinderbohrung 8 im Kurbelgehäuse berührt. An dieser Stelle verhindert also die Strömungsleiteinrichtung 5 ein Abströmen eines Kühlmediums M in der Kavität 9 von einem Einströmkanal 10 in Richtung eines Abfuhrkanals 11. Vielmehr wird die Strömung so gelenkt, dass der größte Teil der Strömung durch die Öffnung(en) 4 tritt.

Auch bei für einen Einbau günstigen Abstand der Strömungsleiteinrichtung 5 von der Wandung 12 der Zylinderbohrung 8 der Zylinderlaufbuchse 1 im Kurbelgehäuse 6 ist gewährleistet, dass der größte Teil der Strömung des Kühlmediums M durch die Öffnung 4 bzw. die Öffnungen 4 in der Strömungsleiteinrichtung 5 erfolgt.

Durch Blockpfeile dargestellt ist die Strömungsrichtung des Kühlmediums M, das heißt einströmend in Einströmkanal 10 und abströmend aus Abfuhrkanal 11.

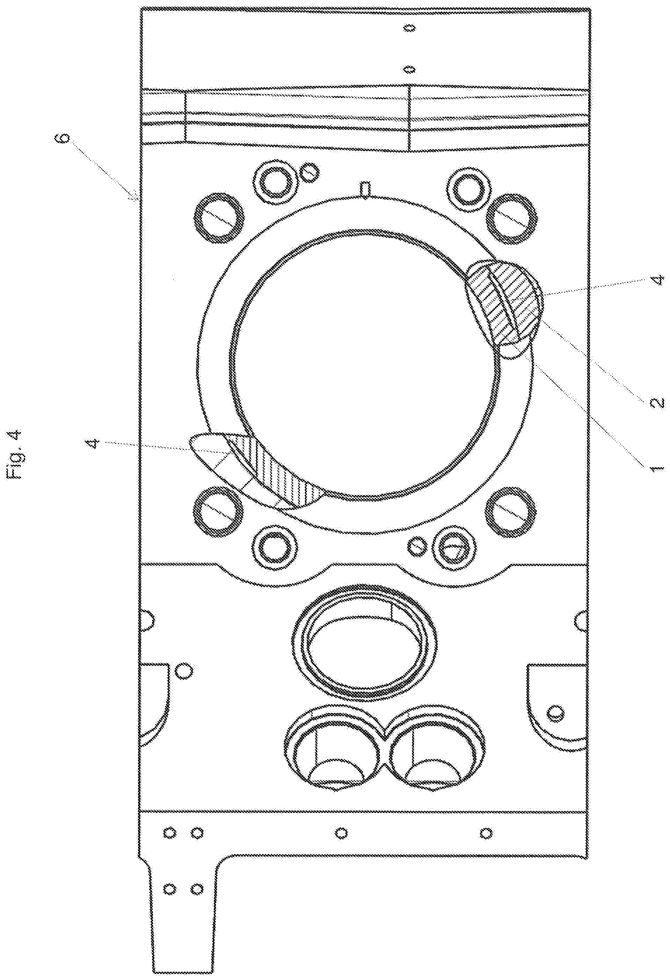

Figur 4 zeigt ein Kurbelgehäuse 6 in einer Draufsicht. Die Schnittführung ist dabei so gelegt, dass die Öffnungen 4 erkennbar sind.

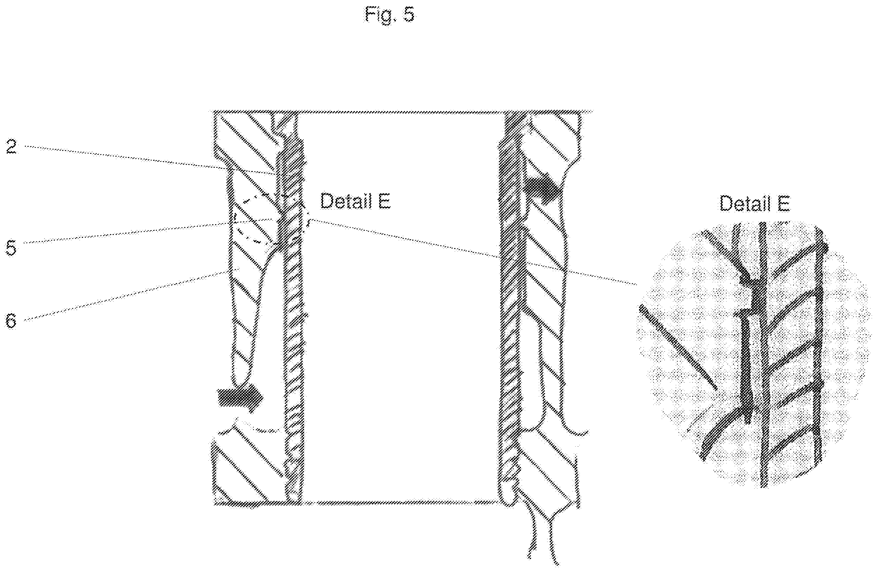

Figur 5 zeigt ein nicht erfindungsgemäßes Ausführungsbeispiel, in welchem die Strömungsleiteinrichtung 5 als Teil des Kurbelgehäuses 6 ausgebildet ist, wie im Detail E hervorgehoben. Die Zylinderlaufbuchse 1 weist in diesem Beispiel also keine Strömungsleiteinrichtung 5 auf.

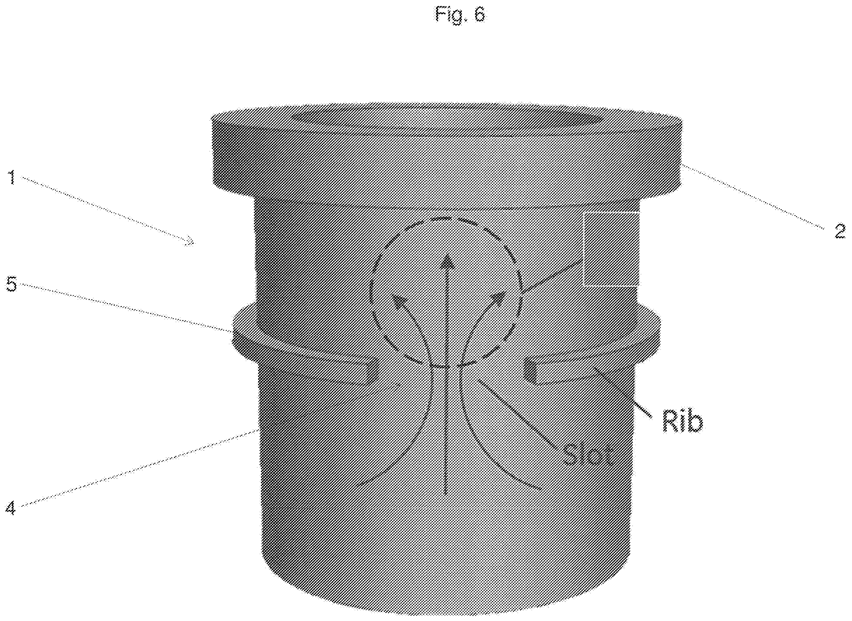

Figur 6 zeigt eine vereinfachte perspektivische Ansicht einer Zylinderlaufbuchse 1 mit einer vorstehende Strömungsleiteinrichtung 5 und einer Öffnung 4.

Zur Illustration der Wirkung der Erfindung sind Strömungslinien des Kühlmediums M eingetragen, wie sie sich im eingebauten Zustand der Zylinderlaufbuchse 1 in ein nicht dargestelltes Kurbelgehäuse 6 zwischen der Wandung der Zylinderbohrung 8 und der Zylinderlaufbuchse ergeben. Es kommt deutlich zum Ausdruck, dass über die Strömungsleiteinrichtung 5 zusammen mit Öffnungen 4 die Strömung des Kühlmediums M wirkungsvoll gelenkt werden kann.

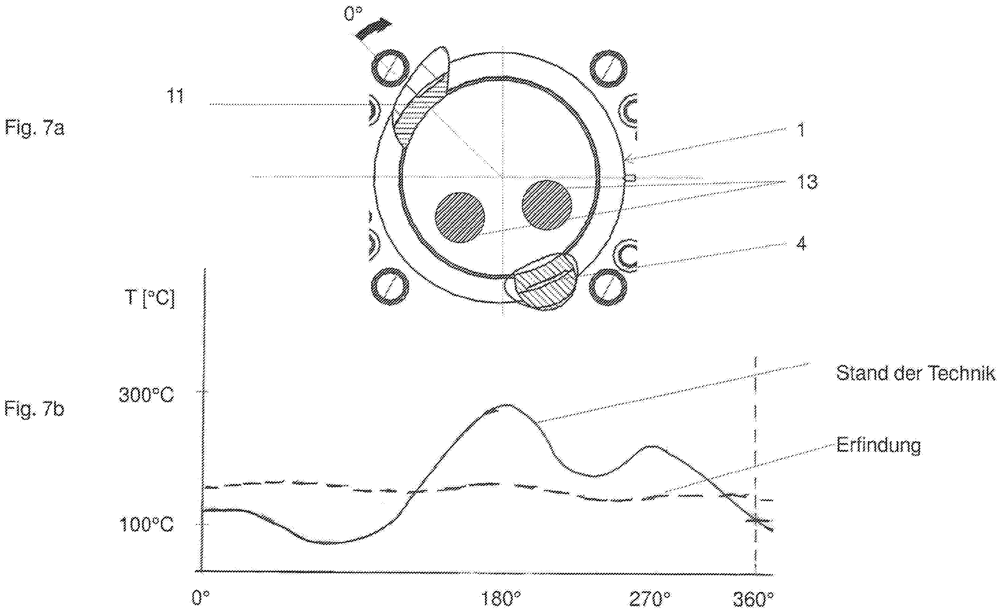

Figur 7a zeigt einen Schnitt bzw. eine Draufsicht einer Anordnung aus Zylinderlaufbuchse 1, Kurbelgehäuse 6, Zylinderkopf 7 und Auslassventilen 13. Eine Schnittebene ist an der Oberkante von Bund 2 normal zur Längsachse der Zylinderlaufbuchse 1 gewählt. Weitere Schnitte sind so gewählt, dass die Öffnungen 4 in der Strömungsleiteinrichtung erkennbar sind, siehe dazu auch Figur 4.

Zusätzlich zu dem anhand Figur 4 Erklärtem sind hier zusätzlich zwei Auslassventile 13 eingetragen. Die Darstellung ist kein Schnitt im technischen Sinne sondern eine vereinfachte Darstellung zur Illustration der Gegebenheiten.

Figur 7b zeigt illustrativ Temperaturverläufe entlang des Bundes 2 im Vergleich zwischen Stand der Technik zur Erfindung.

Die Temperatur ist über den Winkel aufgetragen, wobei 360° dem Vollkreis entsprechen. Der Startpunkt der gedachten Messung bei 0° ist in Figur 7a eingezeichnet. Die Abszisse in Figur 7b ist also die Abwicklung einer gedachten Messlinie im Bereich des Bundes 2.

Betrachtet man nun den Temperaturverlauf bei einer Anordnung einer Zylinderlaufbuchse und einem Kurbelgehäuse nach Stand der Technik, so ergibt sich die durchgezogene, als "Stand der Technik" bezeichnete Kurve. Man erkennt, dass im Bereich der Auslassventile 13 (ca. bei 180° und 270°) die Temperatur deutliche Überhöhungen (peaks) aufweist.

Im Bereich des Ausströmkanals 11 ist die Temperatur am geringsten.

Betrachtet man den Temperaturverlauf bei Einsatz der Erfindung, ergibt sich die strichlierte, als "Erfindung" bezeichnete Kurve. Man erkennt, dass sich durch die Erfindung eine wesentlich gleichmäßigere Temperaturverteilung über einen Umfang des Bundes 2 ergibt.

Die angegebenen Zahlenwerte für die Temperatur sind illustrativ und können sich von Motorenmodell zu Motorenmodell deutlich unterscheiden.

### Liste der verwendeten Bezugszeichen:

- 1: Zylinderlaufbuchse
- 2: Bund
- 3: Mantelfläche der Zylinderlaufbuchse
- 4: Öffnung
- 5: Vorstehende Strömungsleiteinrichtung
- 6: Kurbelgehäuse
- 7: Zylinderkopf
- 8: Zylinderbohrung
- 9: Kavität
- 10: Einströmkanal
- 11: Ausströmkanal
- 12: Wandung der Zylinderbohrung 8
- 13: Auslassventil
- M: Kühlmedium
- UR: Umfangsrichtung
- ML: Mantellinie

## Patentansprüche

1. Anordnung aus einer Zylinderlaufbuchse (1) mit einem Bund (2), einem Zylinderkopf (7), und einem Kurbelgehäuse (6), wobei die Zylinderlaufbuchse (1) an ihrer Mantelfläche (3) genau eine vom Bund (2) axial beabstandete, mit wenigstens einer axialen Öffnung (4) versehene vorstehende Strömungsleiteinrichtung (5) aufweist, wobei die Zylinderlaufbuchse (1) in einer Zylinderbohrung (8) unter Ausbildung einer Kavität (9) zwischen einer Mantelfläche der Zylinderlaufbuchse (1) und einer Wandung der Zylinderbohrung (8) angeordnet ist, wobei an axial entgegengesetzten Enden der Zylinderbohrung (8) wenigstens ein Einströmkanal (10) und wenigstens ein Ausströmkanal (11) für ein Kühlmedium (M) angeordnet sind, wobei die Strömungsleiteinrichtung (5) in der Kavität (9) axial zwischen dem wenigstens einen Einströmkanal (10) und dem wenigstens einen Ausströmkanal (11) vorgesehen ist, wobei die Zylinderlaufbuchse (1) so im Kurbelgehäuse (6) ausgerichtet ist, dass die wenigstens eine axiale Öffnung (4) der vorstehenden Strömungsleiteinrichtung (5) hinsichtlich ihrer Winkellage mit der Position wenigstens eines im Zylinderkopf (7) angeordneten Auslassventils (13) korrespondiert.

2. Anordnung nach Anspruch 1, wobei die Strömungsleiteinrichtung (5) an der Wandung der Zylinderbohrung (8) angeordnet ist.

3. Anordnung nach Anspruch 1 oder 2, wobei die Zahl der axialen Öffnungen (4) in der Strömungsleiteinrichtung (5) der Zahl von Ausströmkanälen (11) entspricht.

4. Anordnung nach wenigstens einem der vorangegangenen Ansprüche, wobei die Zylinderlaufbuchse (1) über ihren Bund (2) im Kurbelgehäuse (6) gelagert ist.

5. Anordnung nach wenigstens einem der vorangehenden Ansprüche, wobei die Zylinderlaufbuchse (1) so im Kurbelgehäuse (6) ausgerichtet ist, dass die wenigstens eine axiale Öffnung (4) der vorstehenden Strömungsleiteinrichtung (5) hinsichtlich ihrer Winkellage mit einem Einströmkanal (10) korrespondiert.

6. Anordnung nach wenigstens einem der vorangehenden Ansprüche, wobei die vorstehende Strömungsleiteinrichtung (5) in einer Umfangsrichtung der Mantelfläche (3) der Zylinderlaufbuchse (1) verläuft.

7. Anordnung nach wenigstens einem der vorangehenden Ansprüche, **dadurch gekennzeichnet, dass** bei Vorliegen genau einer axialen Öffnung (4) diese maximal 25% des Umfangs der vorstehenden Strömungsleiteinrichtung (5) beträgt.

8. Anordnung nach wenigstens einem der Ansprüche 1 bis 6, **dadurch gekennzeichnet, dass** bei Vorliegen von zwei Öffnungen (4) diese jeweils maximal 20% des Umfangs der vorstehenden Strömungsleiteinrichtung (5) betragen.

9. Anordnung nach wenigstens einem der Ansprüche 1 bis 6, **dadurch gekennzeichnet, dass** bei Vorliegen von drei Öffnungen (4) diese jeweils maximal 18% des Umfangs der vorstehenden Strömungsleiteinrichtung (5) betragen.

10. Anordnung nach wenigstens einem der Ansprüche 1 bis 6, **dadurch gekennzeichnet, dass** bei Vorliegen von vier Öffnungen (4) diese jeweils maximal 15% des Umfangs der vorstehenden Strömungsleiteinrichtung (5) betragen.

11. Anordnung nach wenigstens einem der vorstehenden Ansprüche, wobei die Summe aller axialen Öffnungen (4) maximal 25%, vorzugsweise maximal 10%, des Umfangs der vorstehenden Strömungsleiteinrichtung (5) beträgt

12. Anordnung nach wenigstens einem der vorangegangenen Ansprüche, wobei die vorstehende Strömungsleiteinrichtung (5), bezogen auf die Längserstreckung der Zylinderlaufbuchse (1) in der Mitte der Zylinderlaufbuchse (1), vorzugsweise in dem zum Bund (2) weisenden oberen Drittel der Zylinderlaufbuchse (1) angeordnet ist.

13. Anordnung nach wenigstens einem der vorangegangenen Ansprüche, wobei die Zylinderlaufbuchse (1) als hängende nasse Zylinderlaufbuchse (1) ausgebildet ist.

## Claims

1. Arrangement, consisting of a cylinder liner (1) with a collar (2), a cylinder head (7), and a crankcase (6), wherein the cylinder liner (1) has on its lateral surface (3) exactly one protruding flow-guiding device (5) which is axially spaced from the collar (2) and at least one axial opening (4), wherein the cylinder liner (1) is arranged in a cylinder bore (8) to form a cavity (9) between a side surface of the cylinder liner (1) and a wall of the cylinder bore (8), wherein at least one inflow channel (10) and at least one outflow channel (11) for a coolant(M) are arranged at axially opposite ends of the cylinder bore (8), wherein the protruding flow-guiding device (5) is provided in the cavity (9) axially between the at least one inflow channel (10) and the at least one outflow channel (11),
wherein the cylinder liner (1) is aligned in the crankcase (6) such that the angular position of the at least one axial opening (4) of the projecting protruding flow-guiding device (5) corresponds to the position of at least one outlet valve (13) arranged in the cylinder head (7).

2. Arrangement according to claim 1, wherein the protruding flow-guiding device (5) is arranged on the wall of the cylinder bore (8).

3. Arrangement according to claim 1 or 2, wherein the number of axial openings (4) in the protruding flow-guiding device (5) corresponds to the number of outflow channels (11).

4. Arrangement according to at least one of the preceding claims, wherein the cylinder liner (1) is mounted in the crankcase (6) via its collar (2).

5. Arrangement according to at least one of the preceding claims, wherein the cylinder liner (1) is aligned in the crankcase (6) such that the at least one axial opening (4) of the protruding flow-guiding device (5) corresponds to an inflow channel (10) with respect to its angular position.

6. Arrangement according to at least one of the preceding claims, wherein the above-mentioned protruding flow-guiding device (5) extends in a circumferential direction of the outer surface (3) of the cylinder liner (1).

7. Arrangement according to at least one of the preceding claims, **characterized in that**, if there is exactly one axial opening (4), it accounts for a maximum of 25% of the circumference of the protruding flow-guiding device (5).

8. Arrangement according to at least one of claims 1 to 6, **characterized in that**, if two openings (4) are present, these each comprise a maximum of 20% of the circumference of the protruding flow-guiding device (5).

9. Arrangement according to at least one of claims 1 to 6, **characterized in that**, if there are three openings (4), each of these comprises a maximum of 18% of the circumference of the protruding flow-guiding device (5).

10. Arrangement according to at least one of claims 1 to 6, **characterized in that**, if there are four openings (4), each of these comprises a maximum of 15% of the circumference of the protruding flow-guiding device (5).

11. Arrangement according to at least one of the preceding claims, wherein the sum of all axial openings (4) is at most 25%, preferably at most 10%, of the circumference of the protruding flow-guiding device (5).

12. Arrangement according to at least one of the preceding claims, wherein the above-mentioned protruding flow-guiding device (5) is arranged, relative to the longitudinal extension of the cylinder liner (1), in the middle of the cylinder liner (1), preferably in the upper third of the cylinder liner (1) facing the collar (2).

13. Arrangement according to at least one of the preceding claims, wherein the cylinder liner (1) is designed as a suspended wet cylinder liner (1).

## Revendications

1. Ensemble composé d'une chemise de cylindre (1) avec un épaulement (2), une culasse (7) et un carter de vilebrequin (6), dans lequel la chemise de cylindre (1) présente sur sa surface d'enveloppe (3) exactement un dispositif de guidage d'écoulement (5) en saillie, éloigné axialement de l'épaulement (2), pourvu d'au moins une ouverture axiale (4), dans lequel la chemise de cylindre (1) est disposée dans un alésage de cylindre (8) avec réalisation d'une cavité (9) entre une surface d'enveloppe de la chemise de cylindre (1) et une paroi de l'alésage de cylindre (8), dans lequel au moins un canal d'entrée (10) et au moins un canal de sortie (11) pour un milieu de refroidissement (M) sont disposés aux extrémités axialement opposées de l'alésage de cylindre (8), dans lequel le dispositif de guidage d'écoulement (5) est prévu axialement dans la cavité (9) entre l'au moins un canal d'entrée (10) et l'au moins un canal de sortie (11), dans lequel la chemise de cylindre (1) est orientée dans le carter de vilebrequin (6)
de sorte que l'au moins une ouverture axiale (4) du dispositif de guidage d'écoulement (5) en saillie corresponde, en ce qui concerne sa position angulaire, à la position d'au moins une soupape d'échappement (13) disposée dans la culasse (7).

2. Ensemble selon la revendication 1, dans lequel le dispositif de guidage d'écoulement (5) est disposé sur la paroi de l'alésage de cylindre (8).

3. Ensemble selon la revendication 1 ou 2, dans lequel le nombre d'ouvertures axiales (4) dans le dispositif de guidage d'écoulement (5) correspond au nombre de canaux de sortie (11).

4. Ensemble selon au moins l'une des revendications précédentes, dans lequel la chemise de cylindre (1) est montée sur son épaulement (2) dans le carter de vilebrequin (6).

5. Ensemble selon au moins l'une des revendications précédentes, dans lequel la chemise de cylindre (1) est orientée dans le carter de vilebrequin (6) de sorte que l'au moins une ouverture axiale (4) du dispositif de guidage d'écoulement (5) en saillie corresponde à un canal d'entrée (10) en ce qui concerne sa position angulaire.

6. Ensemble selon au moins l'une des revendications précédentes, dans lequel le dispositif de guidage d'écoulement (5) en saillie s'étend dans une direction circonférentielle de la surface d'enveloppe (3) de la chemise de cylindre (1).

7. Ensemble selon au moins l'une des revendications précédentes, **caractérisé en ce qu'**en présence exactement d'une ouverture axiale (4), celle-ci est de 25 % maximum de la circonférence du dispositif de guidage d'écoulement (5) en saillie.

8. Ensemble selon au moins l'une des revendications 1 à 6, **caractérisé en ce que**, en présence de deux ouvertures (4), celles-ci s'élèvent respectivement à maximum 20 % de la circonférence du dispositif de guidage d'écoulement (5) en saillie.

9. Ensemble selon au moins l'une des revendications 1 à 6, **caractérisé en ce que**, en présence de trois ouvertures (4), celles-ci s'élèvent respectivement à maximum 18 % de la circonférence du dispositif de guidage d'écoulement (5) en saillie.

10. Ensemble selon au moins l'une des revendications 1 à 6, **caractérisé en ce que**, en présence de quatre ouvertures (4), celles-ci s'élèvent respectivement à maximum 15 % de la circonférence du dispositif de guidage d'écoulement (5) en saillie.

11. Ensemble selon au moins l'une des revendications précédentes, dans lequel la somme de toutes les ouvertures axiales (4) est de 25 % maximum, de préférence de 10 % maximum, de la circonférence du dispositif de guidage d'écoulement (5) en saillie

12. Ensemble selon au moins l'une des revendications précédentes, dans lequel le dispositif de guidage d'écoulement (5) en saillie, par rapport à l'extension longitudinale de la chemise de cylindre (1), est disposé au milieu de la chemise de cylindre (1), de préférence dans le tiers supérieur de la chemise de cylindre (1) orienté vers l'épaulement (2).

13. Ensemble selon au moins l'une des revendications précédentes, dans lequel la chemise de cylindre (1) est réalisée comme une chemise de cylindre (1) humide suspendue.
